# EUROPEAN PATENT APPLICATION

(11) **EP 2 784 430 A1**
(43) Date of publication of application: **01.10.2014**
(21) Application number: 11876346.5
(22) Date of filing: 24.11.2011
(51) Int. Cl.: F28F 19/02, A61L 9/00, B01D 53/86

(54) **VEHICULAR ATMOSPHERE PURIFYING APPARATUS**

(71) Applicant: Toyota Jidosha Kabushiki Kaisha, Toyota-shi, Aichi 471-8571 (JP)
(72) Inventor: SHINODA, Yoshihisa, Toyota-shi Aichi 471-8571 (JP)
(74) Representative: TBK
(86) International application number: PCT/JP2011/077004
(87) International publication number: WO 2013/076833

(57) **Abstract**

This invention relates to a vehicular atmosphere purifying apparatus. An object of this invention is to provide a vehicular atmosphere purifying apparatus that, with a less expensive configuration, is capable of diagnosing deterioration in the performance of an ozone purifier. In a routine shown in Figure 12, when it is determined that there is a deterioration diagnosis request, the amount of moisture that has already accumulated at ozone purification sites of activated charcoal at the time of the request is calculated (step 210). If the accumulated moisture amount is equal to or greater than a predetermined amount, it is determined whether the state is such that calculation of a desorbed moisture amount is possible (step 230). If it is determined that calculation of the desorbed moisture amount is possible, the desorbed moisture amount is calculated (step 240), and the calculated desorbed moisture amount and a deterioration determination value are compared (step 250). If the desorbed moisture amount is less than the deterioration determination value, it is determined that the activated charcoal has deteriorated, and an MIL 62 is lit (step 260).

## Description

### Technical Field

The present invention relates to a vehicular atmosphere purifying apparatus, and more particularly to a vehicular atmosphere purifying apparatus that can purify ozone in atmospheric air.

### Background Art

It is know that, with respect to purification of atmospheric air using an ozone purifier, the purification performance deteriorates as the result of long-term use, and various kinds of research and development are being carried out with respect to technology for diagnosing such kind of deterioration in the purification performance. For example, Patent Literature 1 discloses a vehicular atmosphere purifying apparatus equipped with a function that diagnoses deterioration in the performance of an ozone purifier. In the aforementioned apparatus, an ozone purifier including an adsorbent that adsorbs ozone and NOx in atmospheric air is provided in a radiator, and the apparatus diagnoses deterioration in the purification performance by detecting a NOx amount that desorbs from the adsorbent while the radiator temperature is rising using a NOx sensor that is provided to the rear thereof.

Ozone or NOx that is adsorbed on an adsorbent desorbs therefrom during an increase in the temperature of the adsorbent. In this case, the adsorption performance of the adsorbent decreases due to a variety of factors, and since the amount that can be adsorbed itself decreases if the adsorption performance decreases, the NOx amount that desorbs during an increase in the temperature of the adsorbent is also reduced. The apparatus disclosed in the aforementioned Patent Literature 1 was conceived based on this point. More specifically, if the amount of change per unit time in the aforementioned NOx amount is small, the apparatus disclosed in Patent Literature 1 diagnoses that the adsorption performance is decreasing and the ozone purifier is deteriorating.

Further, in Patent Literature 3, a vehicular atmosphere purifying apparatus is disclosed in which ozone concentration sensors are provided before and after a radiator in which an ozone purifier is provided, and which is equipped with a function that uses the outputs of these sensors to diagnose deterioration in the performance of the ozone purifier. This apparatus determines that the ozone purifier has deteriorated when a sensor output ratio between the outputs of the two ozone concentration sensors is a ratio that is around half the ratio in the initial state (state when the sensors are new).

### Citation List

### Patent Literature

Patent Literature 1: Japanese Patent Laid-Open No. 2010-29816
Patent Literature 2: Japanese Patent Laid-Open No. 2010-848
Patent Literature 3: Japanese Patent Laid-Open No. 2001-347829
Patent Literature 4: Japanese Patent Laid-Open No. 2010-71080
Patent Literature 5: Japanese Patent Laid-Open No. 2004-321920

### Summary of Invention

However, since the ozone concentration in atmospheric air is generally low, it is necessary to use highly accurate ozone sensors to detect the ozone concentration before and after the radiator in the apparatus described in the aforementioned Patent Literature 3. Further, although the respective concentrations of ozone and NOx that desorb from an adsorbent according to the apparatus described in the aforementioned Patent Literature 1 is higher than the concentration thereof in atmospheric air, the concentrations are still low. Accordingly, an increase in cost is unavoidable in order to detect the above described ozone concentration or to determine the amount of change per unit time in a NOx amount as described above.

The present invention has been conceived in view of the above described problem, and an object of the present invention is to provide a vehicular atmosphere purifying apparatus that can diagnose deterioration in the performance of an ozone purifier with a less expensive configuration.

### Means for Solving the Problem

To achieve the above mentioned purpose, a first aspect of the present invention is a vehicular atmosphere purifying apparatus, comprising:
a vehicle component that is arranged at a location at which a flow path of atmospheric air is formed while a vehicle is running;
an ozone purifier that is provided on the vehicle component and includes activated charcoal;
a temperature sensor and/or a humidity sensor that acquires a parameter that is associated with a moisture amount that is adsorbed on the activated charcoal or that desorbs therefrom; and
deterioration determination means for determining deterioration of the ozone purifier using the parameter.

A second aspect of the present invention is the vehicular atmosphere purifying apparatus according to the first aspect, further comprising:
request determination means for determining existence or non-existence of a deterioration diagnosis request with respect to the ozone purifier; and
moisture supply means for, in a case where existence of the deterioration diagnosis request is determined, supplying moisture to the ozone purifier to cause the moisture to adsorb onto the activated charcoal;
wherein the deterioration determination means determines deterioration of the ozone purifier using a parameter that is associated with a moisture amount that adsorbs on the activated charcoal at a time of supplying the moisture from the moisture supply means.

A third aspect of the present invention is the vehicular atmosphere purifying apparatus according to the first aspect, further comprising:
request determination means for determining existence or non-existence of a deterioration diagnosis request with respect to the ozone purifier; and
heating means for, in a case where existence of the deterioration diagnosis request is determined, heating the ozone purifier to a temperature greater than or equal to a temperature at which it is possible for moisture that is adsorbed on the activated charcoal to desorb therefrom;
wherein the deterioration determination means determines deterioration of the ozone purifier using a parameter that is associated with a moisture amount that desorbs from the activated charcoal at a time of heating by the heating means.

A fourth aspect of the present invention is the vehicular atmosphere purifying apparatus according to the third aspect, further comprising:
moisture supply means for, in a case where existence of the deterioration diagnosis request is determined, supplying moisture to the ozone purifier to cause the moisture to adsorb onto the activated charcoal; and
moisture supply control means for, prior to heating of the ozone purifier by the heating means, controlling the moisture supply means so that the activated charcoal enters a state in which the activated charcoal is saturated with adsorbed moisture.

A fifth aspect of the present invention is the vehicular atmosphere purifying apparatus according to any one of the first to the fourth aspects,
wherein the ozone purifier is formed at one portion of the vehicle component;
the vehicular atmosphere purifying apparatus further comprising:
correction parameter acquisition means for acquiring a correction parameter associated with a moisture amount around a portion at which the ozone purifier is not formed of the vehicle component; and
parameter correction means for correcting the parameter that is acquired by the temperature sensor and/or the humidity sensor using the correction parameter.

A sixth aspect of the present invention is the vehicular atmosphere purifying apparatus according to any one of the first to the fifth aspects, wherein the parameter that is acquired by the humidity sensor is corrected using the parameter that is acquired by the temperature sensor.

A seventh aspect of the present invention is the vehicular atmosphere purifying apparatus according to any one of the third to the sixth aspects, wherein the heating means heats the ozone purifier utilizing heat that is generated by a heat source apparatus that is mounted in the vehicle.

An eighth aspect of the present invention is the vehicular atmosphere purifying apparatus according to any one of the third to the seventh aspects, wherein the heating means preferentially heats the ozone purifier in a vicinity of an installation location of the temperature sensor and/or the humidity sensor.

A ninth aspect of the present invention is the vehicular atmosphere purifying apparatus according to any one of the first to the eighth aspects, wherein:
the vehicle component is a radiator in which is formed an inner channel that comprises an inlet and an outlet of cooling water for cooling a heat source apparatus that is mounted in the vehicle; and
the temperature sensor and/or the humidity sensor is provided in a vicinity of the outlet.

A tenth aspect of the present invention is the vehicular atmosphere purifying apparatus according to the ninth aspect, wherein:
the inner channel comprises a first inner channel that is formed so that a flow path length from the inlet to the outlet is a shortest length therebetween, and a second inner channel that has a longer flow path length than the first inner channel;
the radiator comprises channel switching means capable of switching a distribution destination of cooling water between the first inner channel and the second inner channel; and
the heating means heats the ozone purifier by controlling the channel switching means so that the distribution destination of the cooling water is the first inner channel.

An eleventh aspect of the present invention is the vehicular atmosphere purifying apparatus according to the ninth aspect, wherein the heating means heats the ozone purifier by causing cooling water to flow backwards from the outlet towards the inlet.

A twelfth aspect of the present invention is the vehicular atmosphere purifying apparatus according to any one of the first to the eleventh aspects, wherein the temperature sensor or the humidity sensor is subjected to waterproofing.

A thirteenth aspect of the present invention is the vehicular atmosphere purifying apparatus according to any one of the first to the twelfth aspects, further comprising sensor heating means for heating the humidity sensor utilizing heat that is generated by a heat source apparatus that is mounted in the vehicle.

A fourteenth aspect of the present invention is the vehicular atmosphere purifying apparatus according to any one of the thirteenth aspect, further comprising sensor heating control means for controlling the sensor heating means so as to heat the humidity sensor prior to heating of the ozone purifier by the heating means.

A fifteenth aspect of the present invention is the vehicular atmosphere purifying apparatus according to any one of the first to the fourteenth aspects, further comprising deterioration countermeasure control means for executing countermeasure control based on a determination result obtained by the deterioration determination means.

### Advantageous Effects of Invention

According to the first invention, a parameter associated with an amount of moisture that is adsorbed on activated charcoal or that desorbs therefrom can be acquired using a temperature sensor and/or a humidity sensor. A temperature sensor or a humidity sensor is less expensive than a NOx sensor or an ozone sensor. Therefore, deterioration in the performance of an ozone purifier can be diagnosed with a less expensive configuration.

According to the second invention, deterioration in the performance of an ozone purifier can be determined using a parameter associated with an amount of moisture that adsorbs on activated charcoal when moisture is supplied from moisture supply means. A moisture amount that adsorbs on activated charcoal can be easily acquired using a humidity sensor. Therefore, deterioration in the performance of the ozone purifier can be easily diagnosed.

According to the third invention, deterioration in the performance of an ozone purifier can be determined using a parameter associated with an amount of moisture that desorbs from activated charcoal when heated by heating means. The moisture amount that desorbs from the activated charcoal can be easily acquired using a temperature sensor or a humidity sensor. Therefore, deterioration in the performance of the ozone purifier can be easily diagnosed.

According to the fourth invention, prior to heating by heating means, activated charcoal can be placed in a state in which the activated charcoal is saturated with adsorbed moisture by moisture supply control means. Consequently, since an ozone purifier can be heated in a state in which moisture is definitely adsorbed on activated charcoal, a parameter associated with a moisture amount that desorbs from the activated charcoal can be obtained with greater accuracy. Therefore, the accuracy of diagnosing deterioration in the performance of the ozone purifier can be improved.

According to the fifth invention, a parameter associated with a moisture amount that adsorbs on or desorbs from activated charcoal can be corrected using a correction parameter associated with a moisture amount around a portion at which an ozone purifier is not formed. Therefore, the accuracy of diagnosing deterioration in the performance of the ozone purifier can be improved.

According to the sixth invention, the parameter acquired by means of the humidity sensor can be corrected using the parameter acquired by means of the temperature sensor. Therefore, the accuracy of diagnosing deterioration in the performance of the ozone purifier can be improved.

According to the seventh invention, utilizing heat generated by a heat source apparatus, the ozone purifier can be heated to a temperature that is equal to or greater than a temperature at which moisture adsorbed on activated charcoal can desorb therefrom.

According to the eighth invention, since an ozone purifier arranged in the vicinity of an installation location of the temperature sensor and/or the humidity sensor can be preferentially heated, a time required for acquiring the aforementioned parameter can be shortened in comparison to a case of heating the entire ozone purifier. Therefore, deterioration in the performance of the ozone purifier can be efficiently diagnosed.

In a case where the vehicle component is a radiator, since the cooling water temperature decreases as the cooling water flows from an inlet side towards an outlet side thereof, the temperature (bed temperature) of an ozone purifier decreases in accordance with the proximity thereof to the outlet side. Consequently, it can be said that the environment is such that the closer activated charcoal is to the outlet side, the easier it is for moisture to adsorb thereon. If it is easy for moisture to adsorb onto activated charcoal, ascertainment of a moisture adsorption state and a moisture desorption state is facilitated. According to the ninth invention, since a temperature sensor or a humidity sensor is provided in the vicinity of the outlet side, it is easy to ascertain a moisture adsorption state and a moisture desorption state, and the accuracy of diagnosing deterioration in the performance of the ozone purifier can be further improved.

According to the tenth invention, since channel switching means is controlled so that the inflow destination of cooling water is the first inner channel, the vicinity of the ozone purifier on the outlet side of the cooling water can be heated at an earlier stage in comparison to a case where the cooling water is passed to the second inner channel. Therefore, the ozone purifier in the vicinity of the installation location of the temperature sensor and/or the humidity sensor can be preferentially heated, and a time required for acquiring the aforementioned parameter can be shortened.

According to the eleventh invention, since cooling water is caused to flow backwards from the outlet of the cooling water towards the inlet thereof, the outlet and the inlet of the cooling water can be reversed. Consequently, at a time of normal operation, the vicinity of an ozone purifier that is at the cooling water outlet side can be heated at an early stage. Therefore, the ozone purifier in the vicinity of the installation location of the temperature sensor and/or the humidity sensor can be preferentially heated, and a time required for acquiring the aforementioned parameter can be shortened.

According to the twelfth invention, since a temperature sensor and/or a humidity sensor is subjected to waterproofing, watering of the sensor can be favorably prevented when supplying moisture from the moisture supply means.

According to the thirteenth invention, since the humidity sensor is heated by sensor heating control means, the occurrence of condensation in the humidity sensor can be favorably prevented.

According to the fourteenth invention, by means of sensor heating control means, the humidity sensor can be heated prior to heating of the ozone purifier, and hence, even when condensation has arisen in the humidity sensor, the humidity sensor can be caused to recover from the condensation state. It is therefore possible to suppress a decrease in the accuracy of acquiring the aforementioned parameter due to the occurrence of condensation in the humidity sensor.

According to the fifteenth invention, for example, it is possible to take an appropriate countermeasure if it is determined that the ozone purifier has deteriorated.

### Brief Description of Drawings

Figure 1 is a view that illustrates the configuration of a vehicle in which an atmosphere purifying apparatus according to each of the present embodiment is mounted.
Figure 2 is a plan view of a portion that particularly relates to the atmosphere purifying apparatus of the embodiment 1.
Figure 3 is a schematic drawing of the cooling water circulation system mounted in the vehicle 10.
Figure 4 is a configuration diagram that illustrates the control system of the system according to the embodiment 1.
Figure 5 is a view that illustrates the internal structure of activated charcoal.
Figures 6(A) and (B) are views that illustrate, with respect to a case where nitrogen gas of differing temperatures (25°C, 50°C, and 75°C) is blown through a test piece of activated charcoal (initial bed temperature 25°C), variations over time in the bed temperature (Figure 6(A)) and variations over time in water vapor behavior on the downstream side of the test piece (Figure 6(B)).
Figure 7 is a view that illustrates the relationship between the ozone purifying performance and specific surface area (adsorbed moisture amount) of activated charcoal and an endurance distance.
Figure 8 is a flowchart that illustrates deterioration diagnosis control executed by the ECU 60 according to the embodiment 1.
Figure 9 is a view for describing a modification example of the embodiment 1.
Figure 10 is a plan view of a portion that particularly relates to the atmosphere purifying apparatus of the embodiment 2.
Figure 11 is a plan view of a portion that particularly relates to the atmosphere purifying apparatus of the embodiment 3.
Figure 12 is a flowchart that illustrates deterioration diagnosis control executed by the ECU 60 according to the embodiment 4.
Figure 13 is a flowchart that illustrates deterioration diagnosis control that is executed by the ECU 60 according to the embodiment 5.
Figure 14 is a front view of the radiator 14 in the embodiment 6.

### Description of Embodiments

### Embodiment 1

### [Configuration of vehicular atmosphere purifying apparatus]

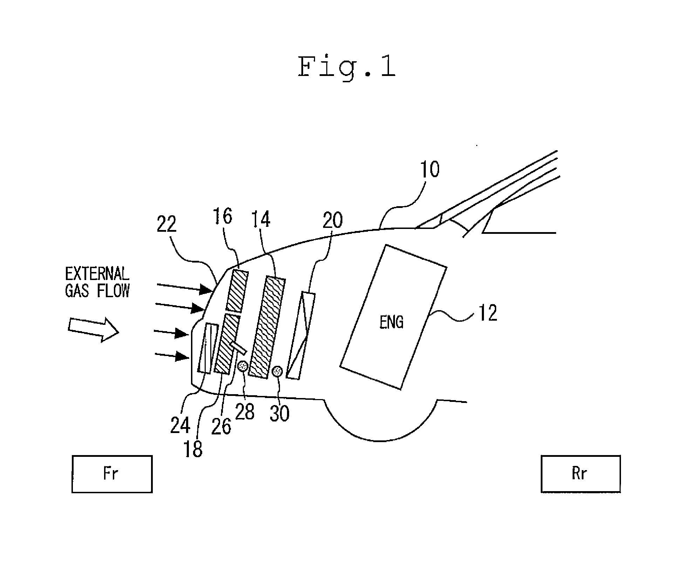

First, Embodiment 1 of the present invention will be described referring to Figure 1 to Figure 9. Figure 1 is a view that illustrates the configuration of a vehicle in which an atmosphere purifying apparatus according to the present embodiment is mounted. A vehicle 10 shown in Figure 1 is a hybrid vehicle that includes an internal combustion engine 12 and an electric motor (described later) as power apparatuses. HC and NOx are contained in exhaust gas that is discharged from the internal combustion engine 12. Ozone is generated by a photochemical reaction in which HC or NOx acts as a reactant. Consequently, the impact the vehicle 10 has on the environment can be reduced by mounting an atmosphere purifying apparatus in the vehicle 10 and purifying ozone in atmospheric air while the vehicle 10 is running.

In the vehicle 10, a radiator 14 that cools cooling water that circulates in the internal combustion engine 12 is arranged in front of the internal combustion engine 12. A radiator 16 for hybrid use that cools cooling water that circulates in an inverter (described later) that supplies power to the electric motor, and a capacitor 18 of an air conditioning system are arranged in front of the radiator 14. Activated charcoal as an ozone purifier is coated on core portions of the radiators 14 and 16 and the capacitor 18, respectively. A radiator fan 20 is installed at the rear of the radiator 14 so as to cover the entire rear face thereof. The radiator fan 20 is adapted so as to be capable of rotating in a forward direction and a reverse direction. When the radiator fan 20 is rotated in the forward direction, air at the rear of the radiator 14 is drawn out to the internal combustion engine 12 side, and when the radiator fan 20 is rotated in the reverse direction, air at the front of the internal combustion engine 12 is drawn to the radiator 14 side.

In the vehicle 10, an electrically powered grille shutter 24 that is configured to be capable of opening and closing is arranged between the capacitor 18 and the bumper grille 22. The grille shutter 24 is normally placed in an open state. When the grille shutter 24 is in an open state, the inside and outside of the vehicle 10 communicate. When the vehicle 10 runs while the grille shutter 24 is in an open state, external air is taken in from the bumper grille 22 side at the front face of the vehicle 10, and passes through the radiator 16 and capacitor 18 and the radiator 14 in that order and is discharged to the rear side. That is, while the vehicle 10 is running, running wind comes in contact with the radiators 14 and 16 and the capacitor 18. In contrast, if the grille shutter 24 is closed, an inflow of running wind to the inside of the vehicle 10 is blocked.

Further, in the vehicle 10, an injector 26 is provided between the radiator 14 and the capacitor 18. The injector 26 is connected to a water tank such as a washer tank that is not shown in the drawings, and is configured to be capable of spraying moisture onto the surface of the radiator 14. Humidity sensors 28 and 30 that are capable of detecting a moisture concentration are provided at the front and rear of the radiator 14. Preferably, the humidity sensor 28 has a waterproof structure such that sprayed water from the injector 26 does not directly adhere to the humidity sensor 28.

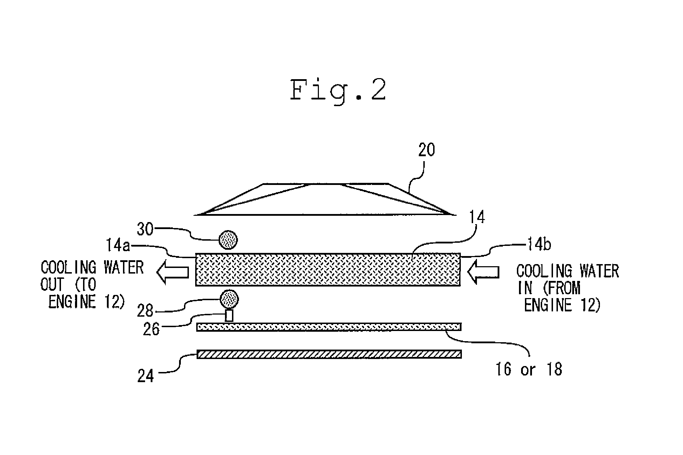

The locations at which the humidity sensors 28 and 30 are mounted will now be described referring to Figure 2. Figure 2 is a plan view of a portion that particularly relates to the atmosphere purifying apparatus of the present embodiment. As shown in Figure 2, the humidity sensors 28 and 30 are respectively provided in the vicinity of a side face 14a of the radiator 14. This is because passing of cooling water through the radiator 14 is performed from a side face 14b side towards the side face 14a side, and hence a temperature in the vicinity of the side face 14a that is near to an outlet thereof is lower than in the vicinity of the side face 14b and thus moisture is liable to adsorb in that region. It is therefore easy to ascertain a moisture adsorption state in that region, and the region is suitable for diagnosing deterioration as described later.

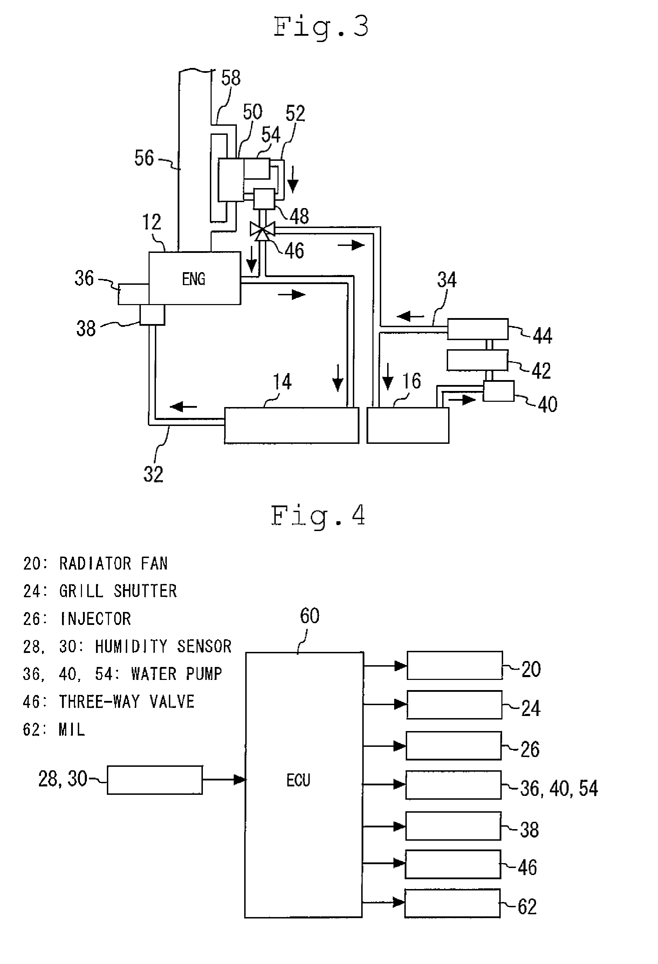

Passing of water into the radiators 14 and 16 is performed by means of a cooling water circulation system. The cooling water circulation system will now be described referring to Figure 3. Figure 3 is a schematic drawing of the cooling water circulation system mounted in the vehicle 10. As shown in Figure 3, cooling water circulation circuits 32 and 34 are mounted in the vehicle 10. The cooling water circulation circuit 32 is provided for the purpose of cooling the internal combustion engine 12. The cooling water circulation circuit 34 is provided for the purpose of cooling an inverter 42.

In addition to the radiator 14, a water pump 36 and a thermostat 38 are provided in the cooling water circulation circuit 32. Passing of water to the radiator 14 is allowed or stopped in accordance with whether the thermostat 38 is open or closed. More specifically, during driving of the water pump 36, if the cooling water temperature becomes equal to or higher than a predetermined temperature, the thermostat 38 is opened to allow passage of water into the radiator 14, while if the cooling water temperature is less than the predetermined temperature, the thermostat 38 is closed to stop passage of water into the radiator 14.

In addition to the radiator 16 and the inverter 42, a water pump 40 and an electric motor 44 are provided in the cooling water circulation circuit 34. Passing of water to the radiator 16 is performed by driving of the water pump 40.

The cooling water circulation circuits 32 and 34 are connected to a heat storage tank 48 through a three-way valve 46. The three-way valbve 46 is configured so as to connect or disconnect the heat storage tank 48 to or from the cooling water circulation circuits 32 and 34. When the three-way valve 46 is activated, cooling water is passed from inside the heat storage tank 48 to the cooling water circulation circuit 32 and the cooling water circulation circuit 34. The heat storage tank 48 is a tank that temporarily stores high-temperature cooling water, and constitutes one part of an exhaust heat recovery system.

The exhaust heat recovery system includes an exhaust heat recovery device 50, a heat storage circuit 52 and a water pump 54, in addition to the heat storage tank 48. The exhaust heat recovery device 50 is provided in a bypass passage 58 that bypasses a part of an exhaust passage 56 of the internal combustion engine 12, and is constructed so that exhaust gas of the internal combustion engine 12 and cooling water pass through the inside thereof. The exhaust heat recovery device 50 recovers exhaust heat of the internal combustion engine 12 by heat exchange between exhaust gas and cooling water that flow therethrough. The water pump 54 is provided to cause cooling water to circulate around the inside of the heat storage circuit 52.

An ECU (electronic control unit) 60 is mounted as a control apparatus in the vehicle 10. Figure 4 is a configuration diagram that illustrates the control system of the system according to the present embodiment. As shown in Figure 4, the humidity sensors 28 and 30 are connected to an input side of the ECU 60. The above described radiator fan 20, grille shutter 24, injector 26, water pumps 36, 40, and 54, thermostat 38, and three-way valve 46 are connected to the output side of the ECU 60, and in addition, an MIL (malfunction indication lamp) 62 and the like that are arranged on an instrument panel (not shown in the drawings) of the vehicle 10 are also connected to the output side of the ECU 60.

### [Activated charcoal as ozone purifier, and issues associated therewith]

Since activated charcoal has ozone purifying performance that is comparable with that of metal oxides such as manganese dioxide, and can also be obtained at low cost, it is regarded as a promising as an ozone purifier. Further, since activated charcoal can purify ozone in a normal temperature (25°C) region and not just in a temperature region of water that is passed to an engine radiator (normally 80 to 100°C) and a temperature region of water that is passed to a radiator for hybrid use (normally 50 to 70°C), activated charcoal is useful in comparison to the aforementioned metal oxides which require a high purification temperature of approximately 80°C or more.

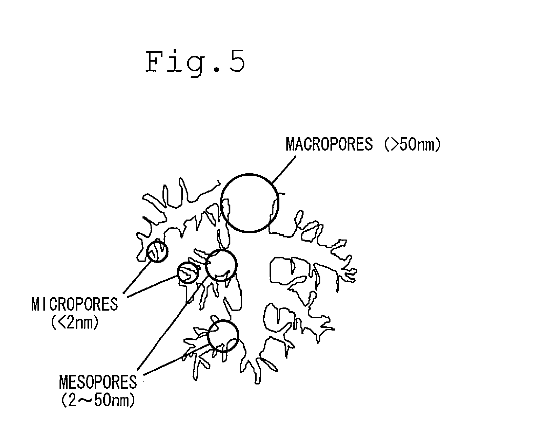

Figure 5 is a view that illustrates the internal structure of activated charcoal. As shown in Figure 5, activated charcoal has a countless number of pores that are formed from the surface towards the inside thereof. These pores are classified according to their size into macropores (> 50 nm), mesopores (2 to 50 nm) and micropores (< 2 nm). Decomposition of ozone by activated charcoal occurs when ozone enters the mesopores and micropores among the aforementioned kinds of pores. More specifically, ozone that enters the mesopores and micropores accepts an electron donated by the activated charcoal around the ozone and is converted into oxygen and activated oxygen (O₃ → O₂ + O*). In the following description, a site at which this kind of ozone conversion can be performed is referred to as an "ozone purification site".

Although the specific surface area of activated charcoal is large, activated charcoal also exhibits a high degree of hydrophobicity. This is because many of the aforementioned mesopores and micropores are constituted by only carbon, and thus have a structure on which it is difficult to adsorb water (water molecules). However, an ozone purification site includes a substance other than carbon, and thus has a structure on which it is easy to adsorb water compared to a site constituted from only carbon. Therefore, for example, in a case where activated charcoal has been watered during wet weather, the water is preferentially adsorbed at an ozone purification site.

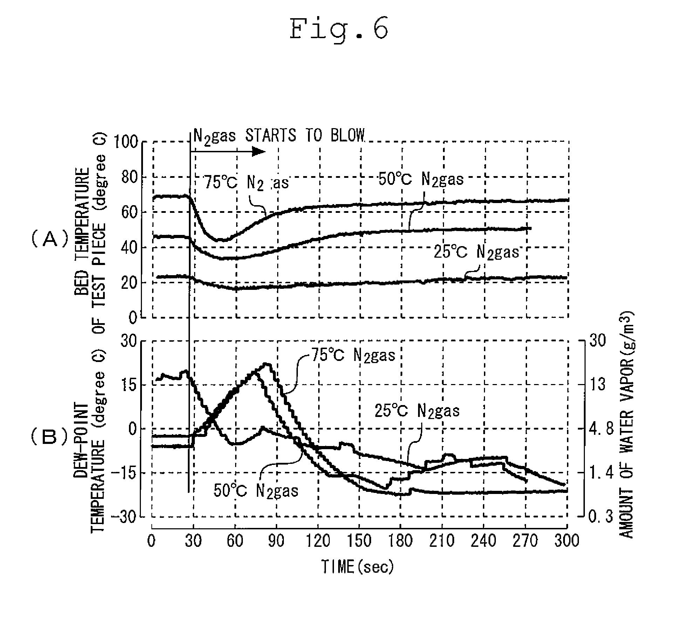

Water that has adsorbed on an ozone purification site desorbs therefrom accompanying a rise in the temperature of the activated charcoal. This desorption phenomenon will now be described with reference to Figures 6. Figures 6(A) and (B) are views that illustrate, with respect to a case where nitrogen gas of differing temperatures (25°C, 50°C, and 75°C) is blown through a test piece of activated charcoal (initial bed temperature 25°C), variations over time in the bed temperature (Figure 6(A)) and variations over time in water vapor behavior on the downstream side of the test piece (Figure 6(B)). Note that, as shown in Figures 6(A) and (B), nitrogen gas was blown through the test piece from a time point that was approximately 30 seconds after the start of the test.

As shown in Figure 6(A), when the nitrogen gas with a temperature of 25°C was blown through, there was almost no change in the bed temperature of the test piece from the initial bed temperature. On the other hand, when the nitrogen gas with a temperature of 50°C or 75°C was blown through, the bed temperature of the test piece temporarily decreased, and thereafter increased so as to approach the temperature of the blown gas. Further, as shown in Figure 6(B), when the nitrogen gas with a temperature of 25°C was blown through, the dew-point temperature increased slightly approximately 80 seconds after the start of the test, and thereafter gradually decreased. In contrast, when the nitrogen gas with a temperature of 50°C or 75°C was blown through, the dew-point temperature reached a peak approximately 80 to 90 seconds after the start of the test, and thereafter decreased. It was thus found that when nitrogen gas of a higher temperature than the initial bed temperature is blown through, water vapor is released on the downstream side of the activated charcoal. That is, it is found that if activated charcoal is heated to a high temperature, water that is adsorbed on an ozone purification site is desorbed.

Therefore, it can also be considered that deterioration can be suppressed by periodically passing water to the radiator 14 and heating the activated charcoal to a high temperature to desorb the water. However, in recent years there is an increasing trend towards lowering the fuel consumption of vehicles, and for this purpose it is necessary to suppress to a minimum the frequency at which water is passed to an engine radiator to thereby decrease cooling loss of the internal combustion engine. In addition, for hybrid vehicles such as the vehicle 10, the frequency of cooling the engine radiator tends to be lower since the engine load is reduced. In view of these factors, it can be said that, with respect to the vehicle 10, in particular, the environment is one in which it is easy for a state in which water is adsorbed on activated charcoal that is coated on the radiator 14 to continue for an extended period. Further, in an environment in which a state in which water is adsorbed on the activated charcoal has continued, the possibility that donation of electrons from the activated charcoal to the adsorbed water will occur increases. In such a case, the activated charcoal undergoes a hydrolysis reaction and ozone purification sites disappear.

### [Deterioration diagnosis control in Embodiment 1]

Next, deterioration diagnosis control that is executed according to the present embodiment will be described. As described in the foregoing, when an ozone purification site of activated charcoal disappears, the ozone purifying performance deteriorates. Therefore, in the present embodiment a configuration is adopted that determines a moisture amount that adsorbs (hereunder, referred to as "adsorbed moisture amount") on ozone purification sites while the vehicle 10 is running, and diagnoses deterioration of the activated charcoal based on the adsorbed moisture amount.

More specifically, the adsorbed moisture amount is determined by spraying moisture from the injector 26 while the vehicle 10 is running, and determining a difference in moisture concentrations detected by the humidity sensors 28 and 30 at such time. If moisture if sprayed from the injector 26 while the vehicle 10 is running, the moisture follows the flow of atmospheric air that flows in from the outside and passes through the radiator 14. If there is reserve adsorption capacity at ozone purification sites of the activated charcoal when the moisture passes through the radiator 14, a certain difference will arise between the moisture concentration detected at the humidity sensor 30 and the moisture concentration detected at the humidity sensor 28. In contrast, if there is no reserve adsorption capacity at the ozone purification sites, a difference between the moisture concentrations detected at the two sensors will be small.

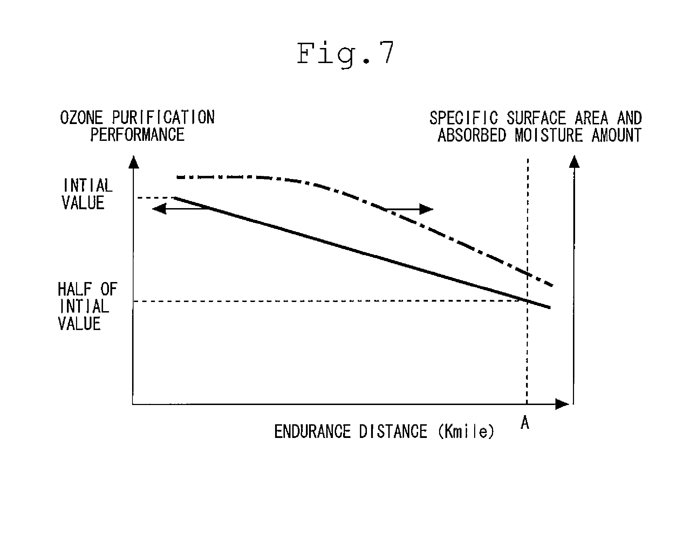

Figure 7 is a view that illustrates the relationship between the ozone purifying performance and specific surface area (adsorbed moisture amount) of activated charcoal and an endurance distance. In Figure 7, the solid line represents the ozone purifying performance of activated charcoal and the broken line represents the specific surface area. As shown in Figure 7, in a long distance region, the ozone purifying performance and the specific surface area decrease in accordance with the travelled distance. In contrast, a decrease in the specific surface area is not observed in a short distance region. The reason is that the speed at which ozone purification sites disappear due to hydrolysis is fast, and a decrease in the specific surface area is observed later than a decrease in the ozone purifying performance. In the present embodiment, the deterioration determination value is set in consideration of this characteristic regarding a decrease in the specific surface area. That is, in Figure 7, since the ozone purifying performance at the time of an endurance distance A is approximately half of the ozone purifying performance in the initial state, the deterioration determination value is set based on a specific surface area (adsorbed moisture amount) that corresponds to the endurance distance A. It is assumed that the deterioration determination value is previously stored in the ECU 60.

### [Specific processing in Embodiment 1]

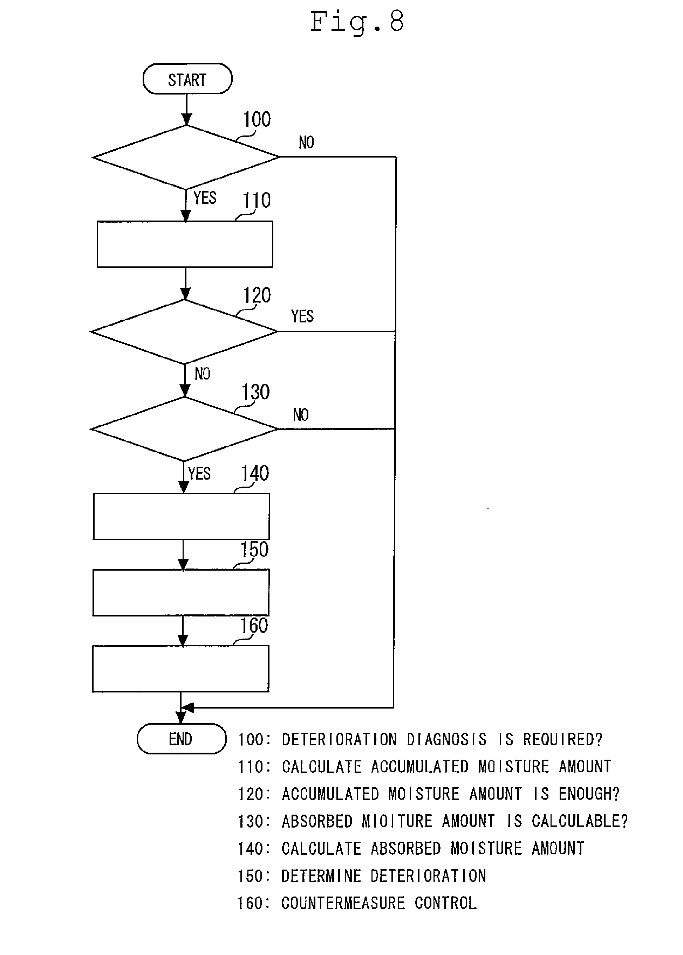

Next, specific processing for implementing the above described deterioration diagnosis function is described while referring to Figure 8. Figure 8 is a flowchart that illustrates deterioration diagnosis control executed by the ECU 60 according to the present embodiment. It is assumed that the routine shown in Figure 8 is repeatedly executed at regular intervals.

According to the routine shown in Figure 8, first the ECU 60 determines whether or not there is a deterioration diagnosis request (step 100). If it is determined that there is a deterioration diagnosis request, the ECU 60 calculates a moisture amount that had already accumulated (hereunder, referred to as "accumulated moisture amount") at ozone purification sites at the time of the deterioration diagnosis request (step 110). In step 110, the ECU 60 calculates the accumulated moisture amount by integrating a correction value that is based on the specifications of the ozone purifier, a correction value that is based on the driving history of the vehicle 10, and a correction value that is based on the execution history of deterioration diagnosis control into a passed moisture amount that is calculated in accordance with a travelled distance of the vehicle 10. It is assumed that the ECU 60 internally stores information in which the relationship between a travelled distance and the aforementioned passed moisture amount has been previously converted into map data. Similarly, it is assumed that the ECU 60 internally stores correction values based on the specifications of the ozone purifier, correction values based on the aforementioned driving history, and correction values based on the history of deterioration diagnosis control.

Next, the ECU 60 determines whether the accumulated moisture amount calculated in step 110 is equal to or greater than a predetermined amount (step 120). If it is determined that the accumulated moisture amount is equal to or greater than the predetermined amount, since it can be expected that a difference between the moisture concentrations detected at the time of moisture spraying will be extremely small and thus it can be determined that deterioration diagnosis cannot be accurately performed, the ECU 60 ends the present routine. In contrast, if it is determined that the accumulated moisture amount is less than the predetermined amount, the ECU 60 determines whether the state in which it is possible to calculate an adsorbed moisture amount (step 130). More specifically, the ECU 60 determines whether or not the vehicle 10 is not stopped and the radiator 14 is in a state in which water is not being passed therethrough. Note that in the present description the term "the vehicle 10 is stopped" refers to a case where the vehicle 10 is under a predetermined stop condition, that is, a case where the vehicle speed and number of revolutions are equal to or less than a set value, respectively. It is assumed that these set values are previously set so as to also include a time of deceleration of the vehicle 10, in addition to a time that the vehicle 10 is completely stopped and a time when the vehicle 10 is idling (also including a time during execution of so-called "start and stop control"). Whether or not the radiator 14 is in a state in which water is not being passed therethrough is determined based on the open or closed state of the thermostat 38.

In step 130, if it is determined that calculation of the adsorbed moisture amount is possible, the ECU 60 calculates the adsorbed moisture amount (step 140). More specifically, the ECU 60 outputs a moisture spraying instruction to the injector 26, acquires the sensor outputs of the humidity sensors 28 and 30 during the period in which moisture is being sprayed, and calculates the adsorbed moisture amount using the sensor outputs. The method of calculating the adsorbed moisture amount is as described above. In step 130, if it is determined that the state is one in which it is not possible to calculate the adsorbed moisture amount, since it can be determined that it is not necessary to perform a deterioration diagnosis at the current time, the ECU 60 ends the present routine.

Next, the ECU 60 compares the adsorbed moisture amount calculated in step 140 and the deterioration determination value (step 150). In the present step, the deterioration determination value set by the method described in Figure 7 and previously stored in the ECU 60 is used. If the adsorbed moisture amount calculated in step 140 is less than the aforementioned deterioration determination value, the ECU 60 determines that the activated charcoal has deteriorated.

If it is determined in step 150 that the activated charcoal has deteriorated, the ECU 60 lights the MIL 62 to notify the driver of the vehicle 10 to that effect (step 160). In the present step, at the same time as lighting the MIL 62, it is preferable to output an instruction to the respective actuators from the ECU 60 so as to perform running restriction control that restricts a fuel amount injected to the internal combustion engine 12 and a degree of accelerator opening or a degree of throttle opening, and countermeasure control in accordance with the degree of deterioration of the activated charcoal (for example, control that restores the ozone conversion rate of the activated charcoal).

Thus, when it is determined that it is possible to calculate the adsorbed moisture amount according to the routine shown in Figure 8, an adsorbed moisture amount is calculated based on the sensor outputs of the humidity sensors 28 and 30 while moisture is being sprayed, and the degree of deterioration of the activated charcoal can be determined. Accordingly, it is possible to diagnose deterioration of activated charcoal coated on the radiators 14 and 16 and the capacitor 18 using the humidity sensors 28 and 30 that are simpler and less expensive than a NOx sensor or an ozone sensor. Further, since it is generally easy to miniaturize a humidity sensor, it is possible to suppress to the minimum the space that is utilized to mount the humidity sensor.

Note that, in the present embodiment, although moisture is sprayed onto the surface of the radiator 14 from the injector 26, for example, in a case where an EGR (exhaust gas recirculation) system is mounted in the vehicle 10, the moisture may be sprayed by blowing the EGR gas including moisture at the surface of the radiator 14. The present modification example can be similarly applied to the respective embodiments described later.

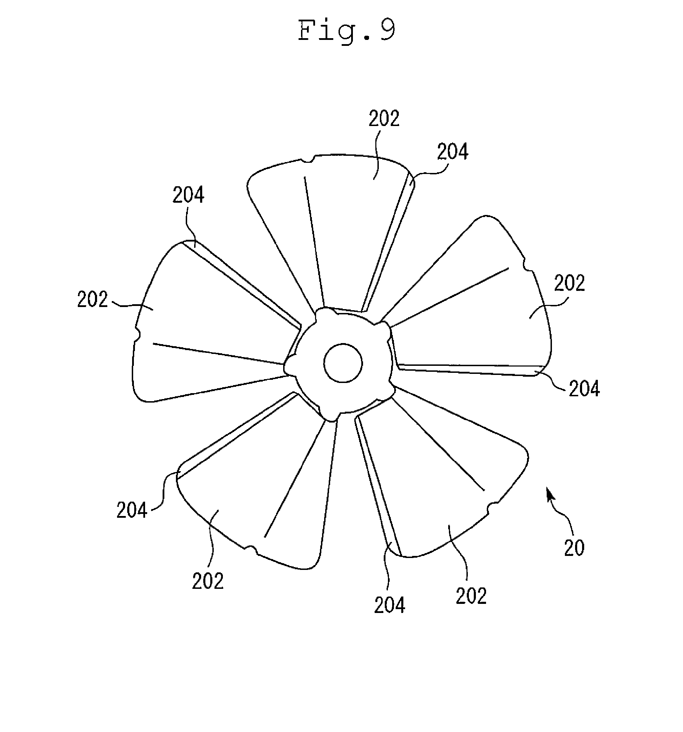

Further, the following modification is possible with respect to spraying moisture onto the radiator 14. Figure 9 is a view for describing a modification example of the present embodiment. As shown in Figure 9, a water accumulating structure 204 is provided at one end of blower vanes 202 constituting the radiator fan 20. If the radiator fan 20 is caused to rotate in the reverse direction during soaking of the internal combustion engine 12, condensed water that temporarily accumulates in the water accumulating structure 204 can be blown from the rear face side of the radiator 14 to also spray moisture thereto.

Although in the present embodiment activated charcoal is used as an ozone purifier, a single metal such as manganese, iron, cobalt, nickel, copper, ruthenium, rhodium, palladium, silver, platinum or gold, or a metallic complex or organometallic complex that includes one of these single metals as a core metal may also be used together with the activated charcoal. These single metals, metallic complexes and organometallic complexes exhibit an ozone purifying performance that is similar to that of activated charcoal, and combined use thereof with activated charcoal is possible. Likewise, a metal oxide such as manganese dioxide may be used together with the activated charcoal. Two or more kinds of these alternate materials may also be used simultaneously. Note that the present modification example can also be similarly applied to the respective embodiments described later.

Further, in the present embodiment, an accumulated moisture amount is calculated by integrating a correction value that is based on the specifications of the ozone purifier, a correction value that is based on the driving history of the vehicle 10, and a correction value that is based on the execution history of deterioration diagnosis control into a passed moisture amount that is calculated in accordance with a travelled distance of the vehicle 10. However, parameters for calculating the accumulated moisture amount are not limited to those of the present embodiment. That is, for example, the accumulated moisture amount may also be calculated based on an ambient temperature or an ambient humidity of the ozone purifier. Further, for example, weather information (rainfall and snowfall), air temperature information or humidity information for the driving region may be acquired from a car navigation system that is separately mounted in the vehicle 10, and the accumulated moisture amount may be calculated based on such information. In addition, an accumulated moisture amount may be calculated by arbitrarily combining the aforementioned calculation parameters. Note that the present modification example can also be similarly applied to the respective embodiments that are described later.

In the foregoing Embodiment 1, the radiators 14 and 16 and the capacitor 18 correspond to "vehicle component" in the above described first invention.

In addition, in Embodiment 1, "request determination means" in the first invention is realized by the ECU 60 executing the processing in step 100 in Figure 8, and "deterioration determination means" in the first invention is realized by the ECU 60 executing the processing in step 150 in Figure 8.

Further, in Embodiment 1, "moisture supply means" in the above described second invention is realized by the ECU 60 executing the processing in step 140 in Figure 8.

Furthermore, in Embodiment 1, "deterioration countermeasure control means" in the above described fifteenth invention is realized by the ECU 60 executing the processing in step 160 in Figure 8.

### Embodiment 2

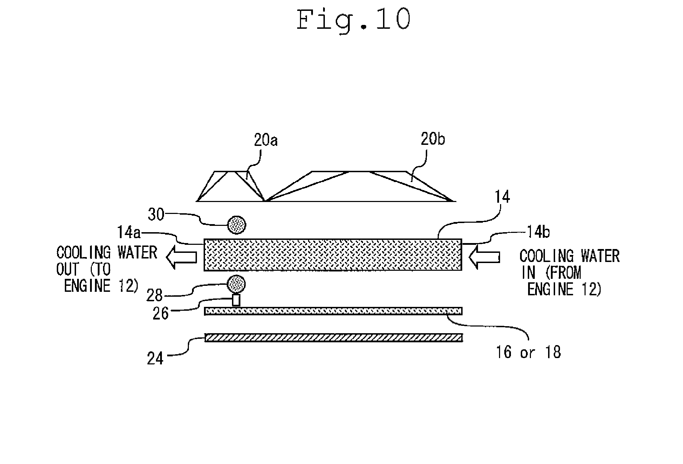

Next, Embodiment 2 of the present invention is described while referring to Figure 10. A feature of the atmosphere purifying apparatus according to the present embodiment is that deterioration diagnosis control that is described hereunder is executed in a configuration in which, relative to the configuration of the atmosphere purifying apparatus of the foregoing Embodiment 1, a dedicated radiator fan is further provided at the rear of the humidity sensor 30. Therefore, a detailed description of the configuration of the vehicle and the deterioration diagnosis control will be omitted.

### [Configuration of vehicular atmosphere purifying apparatus]

Figure 10 is a plan view of a portion that particularly relates to the atmosphere purifying apparatus of the present embodiment. As shown in Figure 10, the humidity sensor 30 is provided at the rear of the radiator 14 at a position in the vicinity of the side face 14a thereof. A radiator fan 20a is provided at the rear of the humidity sensor 30. The radiator fan 20a is a small-size cooling fan. A radiator fan 20b that is larger than the radiator fan 20a is provided next to the radiator fan 20a. It is assumed that the radiator fans 20a and 20b are each connected to the ECU 60.

### [Deterioration diagnosis control in Embodiment 2]

The deterioration diagnosis control of the foregoing Embodiment 1 is control that causes moisture to be sprayed from the injector 26 while the vehicle 10 is running, and performs a deterioration determination based on moisture concentrations detected by the humidity sensors 28 and 30. However, the flow amount and flow rate of atmospheric air that flows into the vehicle from outside while the vehicle is running is easily influenced by the vehicle speed and the external environment. Further, if the radiator fan 20 is operating during the deterioration diagnosis control, there is a possibility that sprayed water will be blown back to the injector 26 side and will not be able to pass through the radiator 14.

Therefore, the deterioration diagnosis control of the present embodiment places the grille shutter 24 in a closed state during moisture spraying, and at the same time, stops operation of the radiator fan 20a. If the grille shutter 24 is placed in a closed state, an inflow of external air into the vehicle 10 can be blocked. If operation of the radiator fan 20a is stopped, a flow from the rearward side of the radiator 14 can be cut off. Accordingly, moisture from the injector 26 can be accurately sprayed onto the surface of the radiator 14.

Further, in the present embodiment, since operation of only the radiator fan 20a is stopped, operation of the radiator fan 20b can be maintained. If operation of the radiator fan 20b can be maintained, the radiator 14 can be cooled even during moisture spraying. Therefore, according to the present embodiment, it is possible to perform deterioration diagnosis control in which the cooling performance of the radiator 14 is maintained.

### Embodiment 3

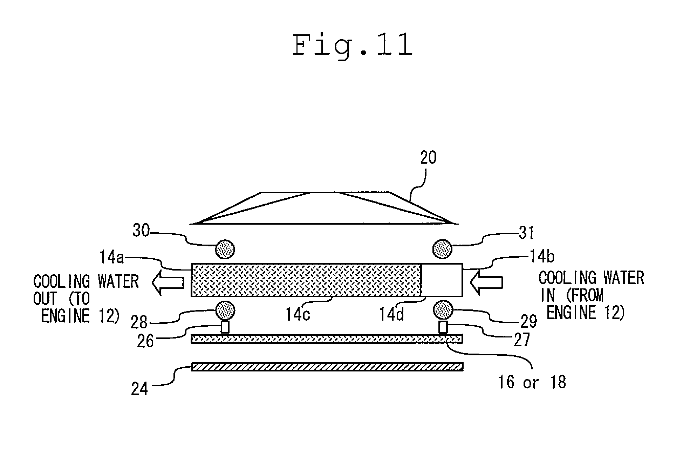

Next, Embodiment 3 of the present invention is described while referring to Figure 11. A feature of the atmosphere purifying apparatus according to the present embodiment is that a core portion of the radiator 14 of the atmosphere purifying apparatus according to the above described Embodiment 1 is constituted by an activated charcoal coated portion that is coated with activated charcoal, and an activated charcoal non-coated portion that is not coated with activated charcoal, and absolute value correction is performed with respect to the humidity sensors 28 and 30 using a humidity sensor provided at the rear of the activated charcoal non-coated portion. Therefore, a detailed description of the apparatus configuration other than the radiator 14 and of the deterioration diagnosis control is omitted hereunder.

### [Configuration of vehicular atmosphere purifying apparatus]

Figure 11 is a plan view of a portion that particularly relates to the atmosphere purifying apparatus of the present embodiment. As shown in Figure 11, the radiator 14 is constituted by an activated charcoal coated portion 14c at which activated charcoal is coated on a core portion thereof, and an activated charcoal non-coated portion 14d at which activated charcoal is not coated. The injector 26 is provided in front of the activated charcoal coated portion 14c, and an injector 27 is provided in front of the activated charcoal non-coated portion 14d. The injectors 26 and 27 are each connected to a water tank such as a washer tank that is not shown in the drawings, and are configured to be capable of spraying moisture onto the surface of the radiator 14.

The humidity sensors 28 and 30 are provided at the front and rear of the activated charcoal coated portion 14c, respectively. Humidity sensors 29 and 31 that are capable of detecting a moisture concentration are provided at the front and rear of the activated charcoal non-coated portion 14d, respectively. Preferably, the humidity sensors 28 and 29 have a waterproof structure such that water sprayed from the injectors 26 and 27 does not directly adhere thereon.

### [Deterioration diagnosis control in Embodiment 3]

In the deterioration diagnosis control of the above described Embodiment 1, specifically, moisture is sprayed from the injector 26 and an adsorbed moisture amount is calculated based on the difference between the moisture concentrations detected at such time with the humidity sensors 28 and 30. In the deterioration diagnosis control of the present embodiment, the injector 27 is operated to spray water at the same time as operation of the injector 26, and sensitivity correction of the respective humidity sensors 28 and 30 is performed based on moisture concentrations detected by the humidity sensors 29 and 31 at that time. Thus, the detection accuracy of the humidity sensors 28 and 30 can be improved. Further, it is also possible to detect whether or not the humidity sensors 28 and 30 are correctly mounted at predetermined positions.

Note that, in the above described Embodiment 3, the humidity sensors 29 and 31 correspond to "correction parameter acquisition means" in the above described fifth invention.

Further, in Embodiment 3, "parameter correction means" in the fifth invention is realized by the ECU 60 performing sensitivity correction for the humidity sensors 28 and 30 based on moisture concentrations detected by the humidity sensors 29 and 31.

### Embodiment 4

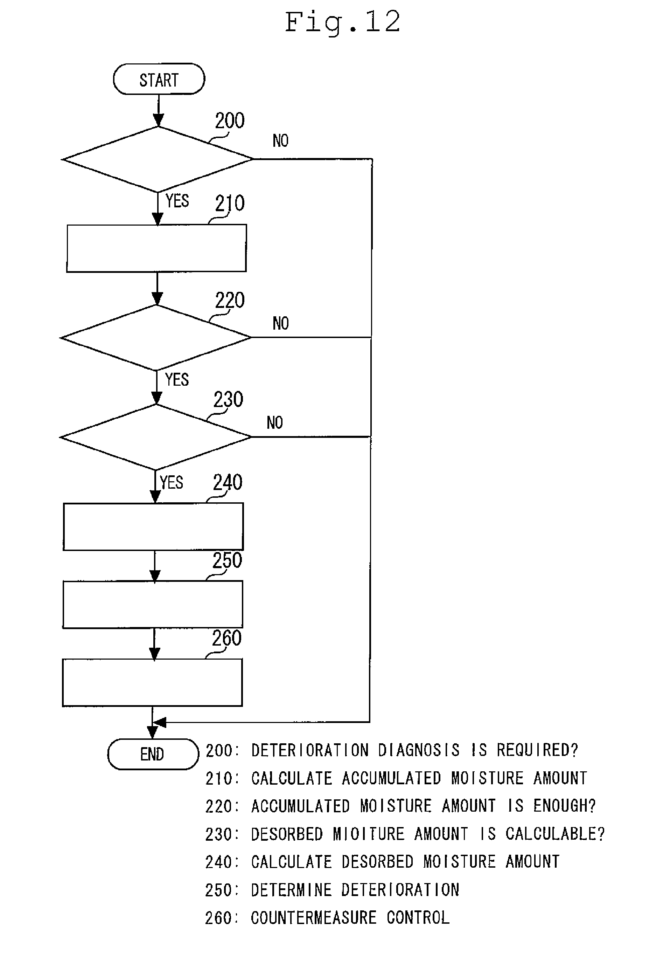

Next, Embodiment 4 of the present invention will be described referring to Figure 12. A feature of the atmosphere purifying apparatus according to the present embodiment is that deterioration diagnosis control illustrated in Figure 12 is executed in an apparatus configuration in which, relative to the atmosphere purifying apparatus of the above described Embodiment 1, the injector 26 and the humidity sensor 28 are not mounted. Therefore, a description of the apparatus configuration will be omitted.

### [Deterioration diagnosis control in Embodiment 4]

As described above in Embodiment 1, ozone purifying performance deteriorates when ozone purification sites of activated charcoal disappear. Consequently, in the above described Embodiment 1, deterioration of activated charcoal is diagnosed based on an adsorbed moisture amount. In the present embodiment, instead of the adsorbed moisture amount, a moisture amount that desorbs from ozone purification sites (hereunder, referred to as "desorbed moisture amount") is determined, and deterioration of the activated charcoal is diagnosed based on the desorbed moisture amount.

More specifically, the desorbed moisture amount is determined based on a moisture concentration detected by the humidity sensor 30 at a time that cooling water is forcibly passed through the radiator 14 while the vehicle 10 is running. Since the temperature of the activated charcoal is raised to a high temperature when cooling water is forcibly passed through the radiator 14 while the vehicle 10 is running, moisture desorbs from ozone purification sites and is discharged to the rear of the radiator 14. Therefore, the desorbed moisture amount can be determined by utilizing the humidity sensor 30 to detect the moisture concentration when the aforementioned moisture is discharged. In this case, if ozone purification sites do not disappear and instead remain, the desorbed moisture amount does not change from an initial state. However, if ozone purification sites disappear, the desorbed moisture amount decreases by an amount corresponding to the extent to which the ozone purification sites disappear. Note that the manner in which moisture adsorbed on an ozone purification site is desorbed therefrom by an increase in the temperature of the activated charcoal is as described above with respect to Figure 6.

Since the deterioration diagnosis that is based on the desorbed moisture amount is diagnosis that uses the humidity sensor 30, similar effects as the deterioration diagnosis based on the adsorbed moisture amount can be obtained. In addition, the deterioration diagnosis based on the desorbed moisture amount can be performed with a simpler configuration than the configuration used to diagnosis deterioration based on the adsorbed moisture amount. The reason is that while it is necessary to install the injector 26 and the humidity sensors 28 and 30 to calculate the adsorbed moisture amount, and it is necessary to pass cooling water through the radiator 14 and install the humidity sensor 30 to calculate the desorbed moisture amount, the existing configuration of the vehicle 10 can be utilized to pass the cooling water through the radiator 14.

However, although there are differences with respect to the technique used to detect the moisture concentration as well as the timing of the detection between the desorbed moisture amount and the adsorbed moisture amount, the detection object is moisture that exists at ozone purification sites, and these two moisture amounts can be regarded as identical. Accordingly, the relationship between the desorbed moisture amount and the endurance distance is equal to the relationship between the adsorbed moisture amount and the endurance distance described in Figure 7. For such reasons, a value that is the same as the deterioration determination value used in the above described Embodiment 1 is set as the deterioration determination value that is used in the present embodiment.

### [Specific processing in Embodiment 4]

Next, specific processing for implementing the above described deterioration diagnosis function is described while referring to Figure 12. Figure 12 is a flowchart that illustrates deterioration diagnosis control executed by the ECU 60 according to the present embodiment. It is assumed that the routine shown in Figure 12 is repeatedly executed at regular intervals.

In the routine shown in Figure 12, the ECU 60 executes the processing in steps 200 and 210. The processing in steps 200 and 210 is the same as the processing in steps 100 and 110 in Figure 8. Following step 210, the ECU 60 determines whether or not the accumulated moisture amount calculated in step 210 is less than or equal to a predetermined amount (step 220). In step 220, if it is determined that the accumulated moisture amount is less than or equal to the aforementioned predetermined amount, since it can be expected that a moisture concentration detected at the time of passing cooling water through the radiator 14 will be extremely low and it can thus be determined that deterioration diagnosis cannot be accurately performed, the ECU 60 ends the present routine.

If it is determined in step 220 that the accumulated moisture amount is greater than the predetermined amount, the ECU 60 determines whether the state is one in which it is possible to calculate a desorbed moisture amount (step 230). More specifically, the ECU 60 determines whether the vehicle 10 is not stopped, the radiator 14 is in a state in which water is not being passed therethrough, and the cooling water temperature is greater than or equal to a predetermined temperature. Note that, in the present step, a temperature (for example, 50°C) at which moisture desorption from the ozone purification sites is possible is used as the predetermined temperature. A determination as to whether the vehicle 10 is stopped and a determination as to whether water is being passed through the radiator 14 are performed in the same manner as described with respect to step 130 in Figure 8.

In step 230, if it is determined that it is possible to calculate the desorbed moisture amount, the ECU 60 calculates the desorbed moisture amount (step 240). More specifically, the ECU 60 outputs an open-valve instruction to the thermostat 38, acquires the sensor output of the humidity sensor 30 during a period in which the valve is open, and calculates the desorbed moisture amount based on the sensor output. In step 230, if it is determined that the state is not one in which it is possible to calculate the desorbed moisture amount, since it can be determined that it is not necessary to perform a deterioration diagnosis at the current time, the ECU 60 ends the present routine.

Next, the ECU 60 compares the adsorbed moisture amount calculated in step 240 and the deterioration determination value (step 250). Note that, as mentioned previously, the deterioration determination value used in the present step is the same value as the deterioration determination value used in the above described Embodiment 1. If the desorbed moisture amount calculated in step 240 is less than the aforementioned deterioration determination value, the ECU 60 determines that the activated charcoal has deteriorated. The processing in step 260 is the same as the processing in step 160 in Figure 8.

Thus, according to the routine illustrated in Figure 12, when it is determined that it is possible to calculate a desorbed moisture amount, the desorbed moisture amount is calculated based on the sensor output of the humidity sensor 30 while the valve of the thermostat 38 is open, and it can be determined whether the activated charcoal has deteriorated. Accordingly, the same effects as in the above Embodiment 1 can be obtained.

Further, in the present embodiment, although the desorbed moisture amount is calculated using the humidity sensor 30, a configuration may also be adopted in which the desorbed moisture amount is calculated using a temperature sensor instead of the humidity sensor 30. At a time of desorption from an ozone purification site, water changes phase to become water vapor, and hence ambient heat is absorbed by the latent heat of vaporization. Consequently, the bed temperature of the activated charcoal and the temperature at the rear of the radiator 14 temporarily decrease. Accordingly, a desorbed moisture amount can be estimated by detecting the aforementioned temperature decrease with a temperature sensor. In this case, similarly to a humidity sensor, since a temperature sensor is simple and inexpensive and is also easy to miniaturize, similar effects as those obtained by the present embodiment can be obtained in the case of the present modification example also. Note that the present modification example can be similarly applied to the respective embodiments described later.

In relation to the above described modification example, a temperature sensor can also be used in combination with the humidity sensor 30. It is thereby possible to improve the reliability of the deterioration diagnosis. In addition, absolute value correction may be performed with respect to the humidity sensor 30 using a temperature sensor. The specific manner in which this is performed is as follows. That is, the latent heat of vaporization is determined based on a desorbed moisture amount calculated using the humidity sensor 30, and the determined value is compared with the latent heat of vaporization calculated using a margin of a decrease in the temperature that is detected by the temperature sensor to thereby perform absolute value correction with respect to the humidity sensor 30. Thus, the accuracy of the deterioration diagnosis can be improved. Note that the present modification example can be similarly applied to the respective embodiments described later.

Although in the present embodiment the activated charcoal is heated to a high temperature by passing cooling water through the radiator 14, a different technique can be sued to heat the activated charcoal. For example, if the three-way valve 46 is forcibly opened while forcibly driving the water pump 54, since it is possible to connect the heat storage tank 48 and the cooling water circulation circuit 32 and pass high-temperature cooling water from inside the heat storage tank 48 through the radiator 14, the activated charcoal can be directly heated to a high temperature. Further, for example, since the capacitor 18 can be heated to a high temperature if a compressor (not shown in the drawings) of the air conditioning system is forcibly driven, the activated charcoal of the radiator 14 that is located at the rear thereof can be directly heated to a high temperature. In addition, the activated charcoal of the radiator 14 may also be heated to a high temperature utilizing, for example, regenerative heat of the electric motor 44, or a reactor, a capacitor, or a battery for hybrid use that are mounted in a common hybrid vehicle. A configuration can also be adopted in which a solar battery, an electric heater for warming up an exhaust emission purifying catalyst (EHC heater), or a combustion heater are separately mounted in the vehicle 10 and utilized to heat the activated charcoal of the radiator 14 to a high temperature. The present modification example can also be similarly applied in Embodiment 5 that is described later.

Note that, in the foregoing Embodiment 4, the internal combustion engine 12 corresponds to "heat source apparatus" in the above described sixth invention.

Further, in Embodiment 4, "heating means" in the above described third invention is realized by the ECU 60 executing the processing in step 240 in Figure 12.

### Embodiment 5

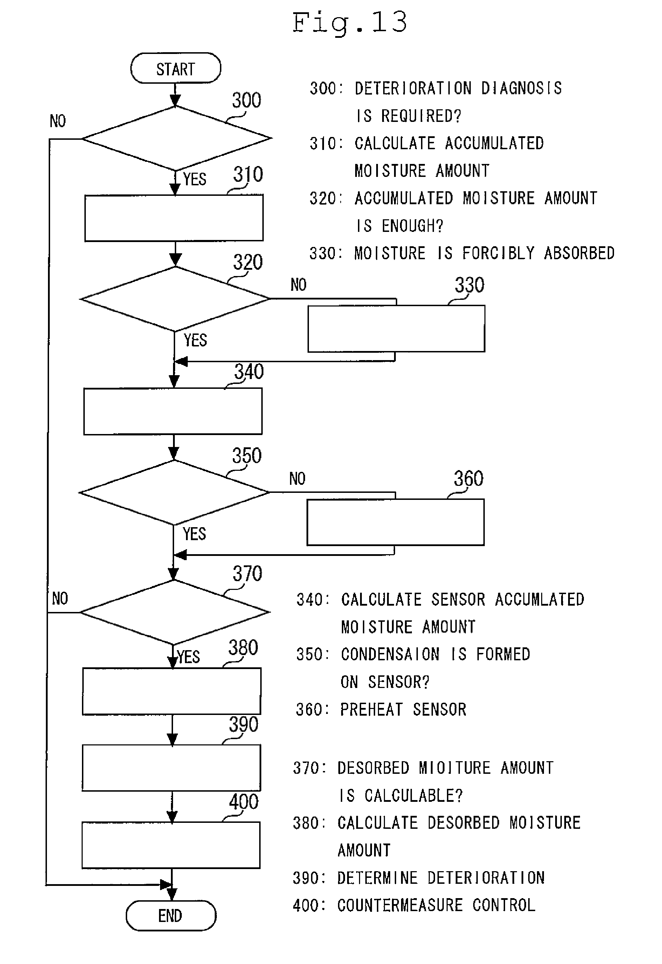

Next, Embodiment 5 of the present invention will be described while referring to Figure 13. A feature of the atmosphere purifying apparatus according to the present embodiment is that deterioration diagnosis control that is illustrated in Figure 13 is executed in an apparatus configuration in which, relative to the configuration of the atmosphere purifying apparatus of the foregoing Embodiment 1, the humidity sensor 28 is not mounted. Therefore, a detailed description of the apparatus configuration will be omitted.

### [Deterioration diagnosis control in Embodiment 5]

Figure 13 is a flowchart that illustrates deterioration diagnosis control that is executed by the ECU 60 according to the present embodiment. It is assumed that the routine shown in Figure 13 is repeatedly executed at regular intervals.

In the routine shown in Figure 13, the ECU 60 executes the processing in steps 300 and 310. The processing in steps 300 and 310 is the same as the processing in steps 100 and 110 in Figure 8. Following step 310, the ECU 60 determines whether or not the accumulated moisture amount calculated in step 310 is less than or equal to a predetermined amount (step 320). In step 320, if it is determined that the accumulated moisture amount is greater than the predetermined amount, the ECU 60 proceeds to step 340.

In step 320, if it is determined that the accumulated moisture amount is equal to or less than the predetermined amount, the ECU 60 sends an instruction to spray moisture to the injector 26, and the injector 26 sprays moisture onto the radiator 14 (step 330). As a result, moisture is forcibly adsorbed on ozone purification sites.

In step 340, the ECU 60 calculates a moisture amount that was already accumulated on the humidity sensor 30 (hereunder, referred to as "sensor accumulated moisture amount") at the time the deterioration diagnosis request was made. The sensor accumulated moisture amount is an accumulated moisture amount that is calculated in a similar manner to the accumulated moisture amount described in Embodiment 1 by integrating a correction value that is based on specifications of the humidity sensor 30, a correction value that is based on the driving history of the vehicle 10, and a correction value that is based on the execution history of deterioration diagnosis control into a passed moisture amount that is calculated in accordance with a travelled distance of the vehicle 10.

Next, the ECU 60 determines whether the sensor accumulated moisture amount calculated in step 340 is equal to or greater than a predetermined amount (step 350). If the ECU 60 determines that the sensor accumulated moisture amount is equal to or greater than the aforementioned predetermined amount, the ECU 60 determines that there is a high possibility that condensation is formed on the humidity sensor 30. Therefore, the ECU 60 executes processing to preheat the humidity sensor 30, and thereafter proceeds to step 370. Preheating of the humidity sensor 30 is performed by passing cooling water that circulates in the internal combustion engine 12 therethrough.

Next, the ECU 60 executes the processing in steps 370 to 400. The processing in steps 370 to 400 is the same as the processing in steps 230 to 260 in Figure 12.

Thus, according to the routine shown in Figure 13, since moisture is sprayed onto the radiator 14 from the injector 26 when it is determined that the accumulated moisture amount is equal to or less than a predetermined amount, it is possible to forcibly cause moisture to be adsorbed on ozone purification sites. Therefore, since cooling water can be passed through the radiator 14 in a state in which moisture is definitely adsorbed on ozone purification sites, the accuracy of deterioration diagnosis can be improved. Further, according to the routine illustrated in Figure 13, when it is determined that the sensor accumulated moisture amount is equal to or greater than a predetermined amount, the humidity sensor 30 can be preheated. Accordingly, since cooling water can be passed through the radiator 14 after condensation of the humidity sensor 30 has been prevented, the accuracy of the deterioration diagnosis can be improved.

In the present embodiment an accumulated moisture amount is calculated by executing the processing in step 310, and the processing in step 320 is then executed to determine whether or not to spray moisture onto the radiator 14 from the injector 26. However, a configuration may also be adopted in which moisture is sprayed onto the radiator 14 from the injector 26 without executing the processing in steps 310 and 320. That is, moisture may be sprayed onto the radiator 14 from the injector 26 immediately after executing the processing in step 300. By executing such processing, in addition to the above described effects, the calculation load can also be reduced with respect to calculation of the accumulated moisture amount.

Further, in the present embodiment, the processing in step 340 is executed to calculate the sensor accumulated moisture amount, and the processing in step 350 is executed to determine whether or not to perform preheating of the humidity sensor 30. However, a configuration may also be adopted in which preheating of the humidity sensor 30 is performed without executing the processing in steps 340 and 350. By executing such processing, in addition to the above described effects, the calculation load with respect to calculation of the sensor accumulated moisture amount can also be reduced.

Furthermore, although in the present embodiment the humidity sensor 30 is preheated passing cooling water that circulates in the internal combustion engine 12 therethrough, a configuration may also be adopted in which preheating is performed by blowing through hot air that was heated utilizing regenerative heat of the electric motor 44 or by passing cooling water from inside the heat storage tank 48 therethrough. Preheating can also be performed utilizing a reactor, a capacitor, or a battery for hybrid use that are mounted in a common hybrid vehicle. Further, a solar battery, an EHC heater, or a combustion heater may be separately mounted in the vehicle 10 and utilized to perform preheating.

Furthermore, in relation to preheating the humidity sensor 30, it is also possible not to perform preheating as such, but to instead constantly pass cooling water that circulates in the internal combustion engine 12 through the humidity sensor 30 to thereby prevent condensation arising at the humidity sensor 30.

Note that, in the foregoing Embodiment 5, "moisture supply control means" in the above described fourth invention is realized by the ECU 60 executing the processing in step 330 in Figure 13, and "sensor heating means" in the above described thirteenth invention is realized by the ECU 60 executing the processing in step 360 in Figure 13.

In addition, in Embodiment 5, "sensor heating control means" in the above described fourteenth invention is realized by the ECU 60 executing the processing in step 360 in Figure 13.

### Embodiment 6

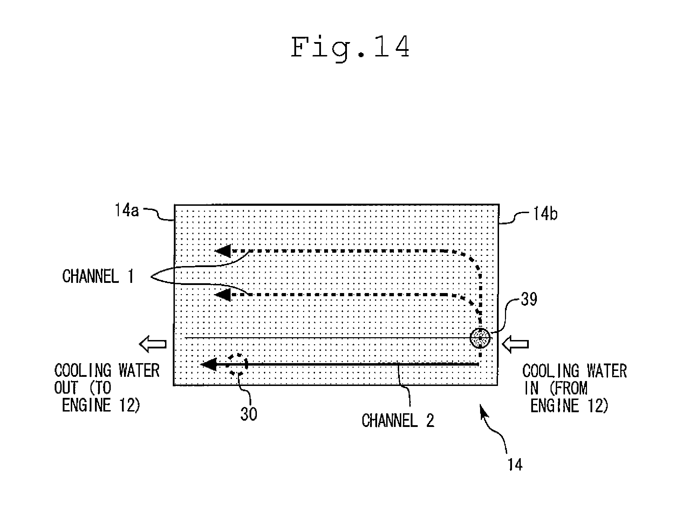

Next, Embodiment 6 of the present invention will be described while referring to Figure 14. The atmosphere purifying apparatus of the present embodiment is the same as the atmosphere purifying apparatus the above described Embodiment 4 except that two kinds of channels and a thermostat are provided in the configuration of the radiator 14. Therefore, a detailed description of the apparatus configuration other than the radiator 14 and of the deterioration diagnosis control is omitted hereunder.

Figure 14 is a front view of the radiator 14 in the present embodiment. As shown in Figure 14, the radiator 14 includes two inner channels (channel 1 and channel 2) and a thermostat 39. The channel 1 is designed in a rectilinear shape from the side face 14b to the side face 14a. The channel 2 is designed so as to flow through the entire inside of the radiator 14. The thermostat 39 is a switching valve that switches the passing of water between the channel 1 and the channel 2 in accordance with the cooling water temperature. More specifically, when the cooling water temperature becomes greater than or equal to a predetermined temperature, the thermostat 39 opens to pass water to the channel 2, and when the cooling water temperature is lower than the predetermined temperature, the thermostat 39 closes to pass water to the channel 1. It is assumed that the thermostat 39 is connected to the output side of the ECU 60, and performs the above described channel switching in accordance with an instruction from the ECU 60. It is assumed that the predetermined temperature at which the thermostat 39 opens is set to the same temperature as the predetermined temperature at which the thermostat 38 opens.

### [Deterioration diagnosis control in Embodiment 6]

When calculating a desorbed moisture amount, if the thermostats 38 and 39 open simultaneously, cooling water will be passed to the channel 2 and hence the entire radiator 14 can be heated to a high temperature, and the activated charcoal coated on the surface thereof can also be heated to a high temperature. However, as shown in Figure 14, the humidity sensor 30 is provided in the vicinity of the side face 14a at a position that is close to the cooling water outlet. The reason for this is that, as also mentioned in the description relating to Figure 2, activated carbon that is close to the cooling water outlet has a low temperature and it is easy for moisture to adsorb thereon. However, on the other hand, there is the problem that, it is difficult for the vicinity of the side face 14a to be heated to a high temperature when cooling water is being passed through the radiator 14, and therefore the deterioration diagnosis takes time.

In this regard, according to the configuration of the radiator 14 of the present embodiment, it is possible to forcibly open the thermostat 38 while maintaining the thermostat 39 in a closed-valve state. Therefore, when performing the deterioration diagnosis control, it is possible to cause only the thermostat 38 among the two thermostats to open so that passing of the cooling water is concentrated on the channel 1. Accordingly, activated charcoal at the frontward side of the humidity sensor 30 can be heated to a high temperature at an early stage, and the time required to perform the deterioration diagnosis can be shortened.

Note that, in the foregoing Embodiment 6, the channel 1 corresponds to "first inner channel" in the above described eleventh invention, the channel 2 corresponds to "second inner channel" in the eleventh invention, and the thermostat 39 corresponds to "channel switching means" in the eleventh invention.

### Embodiment 7

Next, Embodiment 7 of the present invention will be described. A feature of the atmosphere purifying apparatus according to the present embodiment is that the deterioration diagnosis control described below is executed in the above described configuration of Embodiment 4. Therefore, a detailed description of the configuration of the vehicle and the deterioration diagnosis control will be omitted.

### [Deterioration diagnosis control in Embodiment 7]

As described above with respect to Embodiment 6, it is difficult to heat the vicinity of the side face 14a to a high temperature when cooling water is passed through the radiator 14, and consequently there is the problem that the deterioration diagnosis takes time. Therefore, in the foregoing Embodiment 6, two inner channels and an additional thermostat are provided in the radiator 14, and the activated charcoal at the front of the humidity sensor 30 is heated to a high temperature at an early stage. In the present embodiment, when calculating a desorbed moisture amount, the water pump 36 is caused to rotate in the reverse direction to cause cooling water in the cooling water circulation circuit 32 to flow backwards. As a result, high-temperature cooling water is caused to flow in from the side face 14a side of the radiator 14, and the vicinity of the side face 14a can be heated to a high temperature at an early stage. Accordingly, activated charcoal at the frontward side of the humidity sensor 30 can be heated to a high temperature at an early stage, and the time required for deterioration diagnosis can be shortened.

### Description of Reference Numerals

10 vehicle
12 internal combustion engine
14, 16 radiator
18 capacitor
20 radiator fan
22 bumper grille
24 grille shutter
26, 27 injector
28, 29, 30, 31 humidity sensor
32, 34 cooling water circulation system
36, 40, 54 water pump
38, 39 thermostat
42 inverter
44 electric motor
46 three-way valve
48 heat storage tank
50 exhaust heat recovery system
52 heat storage circuit
56 exhaust passage
58 bypass passage
60 ECU
62 MIL
202 blower vanes
204 accumulating structure

## Claims

1. A vehicular atmosphere purifying apparatus comprising:
a vehicle component that is arranged at a location at which a flow path of atmospheric air is formed while a vehicle is running;
an ozone purifier that is provided on the vehicle component and includes activated charcoal;
a temperature sensor and/or a humidity sensor that acquires a parameter that is associated with a moisture amount that is adsorbed on the activated charcoal or that desorbs therefrom; and
deterioration determination means for determining deterioration of the ozone purifier using the parameter.

2. The vehicular atmosphere purifying apparatus according to claim 1, further comprising:
request determination means for determining existence or non-existence of a deterioration diagnosis request with respect to the ozone purifier; and
moisture supply means for, in a case where existence of the deterioration diagnosis request is determined, supplying moisture to the ozone purifier to cause the moisture to adsorb onto the activated charcoal;
wherein the deterioration determination means determines deterioration of the ozone purifier using a parameter that is associated with a moisture amount that adsorbs on the activated charcoal at a time of supplying the moisture from the moisture supply means.

3. The vehicular atmosphere purifying apparatus according to claim 1, further comprising:
request determination means for determining existence or non-existence of a deterioration diagnosis request with respect to the ozone purifier; and
heating means for, in a case where existence of the deterioration diagnosis request is determined, heating the ozone purifier to a temperature greater than or equal to a temperature at which it is possible for moisture that is adsorbed on the activated charcoal to desorb therefrom;
wherein the deterioration determination means determines deterioration of the ozone purifier using a parameter that is associated with a moisture amount that desorbs from the activated charcoal at a time of heating by the heating means.

4. The vehicular atmosphere purifying apparatus according to claim 3, further comprising:
moisture supply means for, in a case where existence of the deterioration diagnosis request is determined, supplying moisture to the ozone purifier to cause the moisture to adsorb onto the activated charcoal; and
moisture supply control means for, prior to heating of the ozone purifier by the heating means, controlling the moisture supply means so that the activated charcoal enters a state in which the activated charcoal is saturated with adsorbed moisture.

5. The vehicular atmosphere purifying apparatus according to any one of claims 1 to 4,
wherein the ozone purifier is formed at one portion of the vehicle component;
the vehicular atmosphere purifying apparatus further comprising:
correction parameter acquisition means for acquiring a correction parameter associated with a moisture amount around a portion at which the ozone purifier is not formed of the vehicle component; and
parameter correction means for correcting the parameter that is acquired by the temperature sensor and/or the humidity sensor using the correction parameter.

6. The vehicular atmosphere purifying apparatus according to any one of claims 1 to 5, wherein the parameter that is acquired by the humidity sensor is corrected using the parameter that is acquired by the temperature sensor.

7. The vehicular atmosphere purifying apparatus according to any one of claims 3 to 6, wherein the heating means heats the ozone purifier utilizing heat that is generated by a heat source apparatus that is mounted in the vehicle.

8. The vehicular atmosphere purifying apparatus according to any one of claims 3 to 7, wherein the heating means preferentially heats the ozone purifier in a vicinity of an installation location of the temperature sensor and/or the humidity sensor.

9. The vehicular atmosphere purifying apparatus according to any one of claims 1 to 8, wherein:
the vehicle component is a radiator in which is formed an inner channel that comprises an inlet and an outlet of cooling water for cooling a heat source apparatus that is mounted in the vehicle; and
the temperature sensor and/or the humidity sensor is provided in a vicinity of the outlet.

10. The vehicular atmosphere purifying apparatus according to claim 9, wherein:
the inner channel comprises a first inner channel that is formed so that a flow path length from the inlet to the outlet is a shortest length therebetween, and a second inner channel that has a longer flow path length than the first inner channel;
the radiator comprises channel switching means capable of switching a distribution destination of cooling water between the first inner channel and the second inner channel; and
the heating means heats the ozone purifier by controlling the channel switching means so that the distribution destination of the cooling water is the first inner channel.

11. The vehicular atmosphere purifying apparatus according to claim 9, wherein the heating means heats the ozone purifier by causing cooling water to flow backwards from the outlet towards the inlet.

12. The vehicular atmosphere purifying apparatus according to any one of claims 1 to 11, wherein the temperature sensor or the humidity sensor is subjected to waterproofing.

13. The vehicular atmosphere purifying apparatus according to any one of claims 1 to 12, further comprising sensor heating means for heating the humidity sensor utilizing heat that is generated by a heat source apparatus that is mounted in the vehicle.

14. The vehicular atmosphere purifying apparatus according to claim 13, further comprising sensor heating control means for controlling the sensor heating means so as to heat the humidity sensor prior to heating of the ozone purifier by the heating means.

15. The vehicular atmosphere purifying apparatus according to any one of claims 1 to 14, further comprising deterioration countermeasure control means for executing countermeasure control based on a determination result obtained by the deterioration determination means.
